# EUROPÄISCHE PATENTANMELDUNG

(11) **EP 1 148 564 A2**
(43) Veröffentlichungstag der Anmeldung: **24.10.2001**
(21) Anmeldenummer: 01106978.8
(22) Anmeldetag: 04.04.2001
(51) Int. Cl.: H01M 8/02, H01M 8/24

(54) **Vorrichtung zur mechanisch-elektrischen Kontaktierung einer Niedertemperatur-Brennstoffzelle**

(30) Priorität: 22.04.2000 DE 10020039
(71) Anmelder: FORSCHUNGSZENTRUM JÜLICH GMBH, 52425 Jülich (DE)
(72) Erfinder: Dohle, Hendrik, 52224 Stolberg (DE)

(57) **Zusammenfassung**

Die Erfindung bezieht sich auf eine Vorrichtung zur mechanisch-elektrischen Kontaktierung der Membran-Elektroden-Einheit einer Niedertemperatur-Brennstoffzelle sowie ein Verfahren zur Herstellung der Vorrichtung.

Die Vorrichtung besteht aus zwei entgegengesetzt gebogenen Blechen, welche die Elektroden in der Art kontaktieren, daß ein gleichmäßiger Anpreßdruck auf die Memban-Elektroden-Einheit ausgeübt wird. Durch Ausführung als elektrisch und mechanisch kontaktierendes Bauteil, welches über Verteilerstrukturen auch Verteilungsfunktion der Betriebsmittel übernehmen kann, wird eine Reduktion an Bauteilen und damit Kosten erzielt. Die Vorrichtung ist insbesondere für den Einsatz in Brennstoffzellenstapeln geeignet.

Das Verfahren zur Herstellung der Vorrichtung umfaßt die Schritte
- eine Membran-Elektroden-Einheit wird zwischen die konvexen Seiten von zwei gebogenen Blechen eingebracht.
- die Bleche werden am Rand aneinander gedrückt.

## Beschreibung

Die Erfindung bezieht sich auf eine Vorrichtung zur mechanisch-elektrischen Kontaktierung der Membran-Elektroden-Einheit einer Niedertemperatur-Brennstoffzelle.

Eine Brennstoffzelle weist eine Kathode, einen Elektrolyten sowie eine Anode auf. Der Kathode wird ein Oxidationsmittel, z. B. Luft und der Anode wird ein Brennstoff, z. B. Wasserstoff zugeführt.

Verschiedene Brennstoffzellentypen sind bekannt, beispielsweise Brennstoffzellen zur Verstromung von Methanol (DE 197 34 634 C1) und PEM-Brennstoffzellen (DE 195 31 852 C1). Die Betriebstemperatur letzterer liegt bei ca. 80°C. An der Anode einer PEM-Brennstoffzelle bilden sich in Anwesenheit des Brennstoffs mittels eines Katalysators Protonen. Die Protonen passieren den Elektrolyten und verbinden sich auf der Kathodenseite mit dem vom Oxidationsmittel stammenden Sauerstoff zu Wasser. Elektronen werden dabei freigesetzt und elektrische Energie erzeugt. Soweit der Elektrolyt als Membran ausgefertigt ist, liegt in der Brennstoffzelle eine Membran-Elektroden-Einheit vor.

Mehrere Brennstoffzellen werden in der Regel zur Erzielung großer elektrischer Leistungen durch verbindende Elemente elektrisch und mechanisch miteinander verbunden (Interkonnektoren). Ein Beispiel für ein verbindendes Element stellt die aus DE 44 10 711 C1 bekannte bipolare Platte dar. Mittels bipolarer Platten entstehen übereinander gestapelte, elektrisch in Serie geschaltete Brennstoffzellen. Diese Anordnung wird Brennstoffzellenstapel genannt. Eine bipolare Platte weist regelmäßig Gasverteilerstrukturen auf, die unmittelbar an die Elektroden der Brennstoffzelle heranreichen. Solche Gasverteilerstrukturen werden in der deutschen Patentschrift DE 197 34 729 beschrieben. Sie werden dort durch ein Blech, in das Schlitze gefräst sind, realisiert. Gasverteilerstrukturen bewirken, daß die Betriebsmittel gleichmäßig in den Elektrodenräumen (Räume in denen sich die Elektroden befinden) verteilt werden.

Bei bekannten Brennstoffzellenstapeln wird ein Anpreßdruck auf die Membran-Elektroden-Einheit der Brennstoffzelle erzeugt. Dieser ist nötig, um das Ablösen der Katalysatorschicht von der im Betrieb quellenden Membran zu vermeiden. Der Anpreßdruck kann beispielsweise über Gewindestangen erzeugt werden, die über beidseitig angeordnete Endplatten die dazwischen liegenden bipolaren Platten axial verspannen (US005547777A).

Nachteilhaft treten beim Stand der Technik folgende Probleme auf:
- Bei der Herstellung bipolarer Platten sind häufig aufwendige mechanische Fertigungsschritte wie Fräsen oder Bohren nötig. Auf Grund der hohen Ansprüche an Materialeigenschaften wie chemische Beständigkeit, mechanische Stabilität und elektrische Leitfähigkeit werden teure Materialien wie Titan oder Graphit verwendet.
- Bei den aus Druckschrift DE 197 15 256 C1 bekannten Kontaktierungsbauteilen ist der Anpreßdruck auf die Membran-Elektroden-Einheit prinzipbedingt nicht so gleichmäßig, weil die modularen Platten in sich starr sind.
- Der Anpreßdruck auf die Membran-Elektroden-Einheiten wird erst bei der Endmontage des Brennstoffzellenstapels über Gewindestangen und Endplatten verwirklicht.
- Bei der Demontage des Brennstoffzellenstapels, z.B. zwecks Austausch einzelner Membranen-Elektroden-Einheiten können sich Probleme einstellen, da der Stapel ein einziges Modul aus vielen Einzelteilen darstellt.

Aufgabe der Erfindung ist es daher, eine Vorrichtung zu schaffen, bei der eine verbesserte elektrische und mechanische Kontaktierung der Membran-Elektroden-Einheit auftritt, welche die oben genannten Nachteile vermeidet, sowie ein Verfahren zur Herstellung einer solchen Vorrichtung anzugeben.

Die Aufgabe der Erfindung wird durch eine Vorrichtung nach Anspruch 1 gelöst. Sie umfaßt zwei gebogene Bleche, die über ihre konvexen Seiten eine Membran-Elektroden-Einheit kontaktieren. Die Bleche können z.B. aus einem 1.4571-VA-Stahl mit Titan-Anteil bestehen (DIN 17440). Sie kontaktieren die Elektroden der Brennstoffzelle in der Art, daß ein gleichmäßiger Anpreßdruck auf die Memban-Elektroden-Einheit ausgeübt wird. Sie besitzen darüber hinaus Mittel zum Stromableiten und fungieren damit als Stromableiter.

In einer vorteilhaften Ausführung besitzen die Bleche Öffnungen (Anspruch 2). Die Fertigung der Öffnungen kann aus einem planen Blech heraus durch Schneiden oder Stanzen ohne weitergehende Bearbeitungsschritte wie Tiefziehen einzelner Geometrieen geschehen. Die Öffnungen dienen der einfachen Zuführung und Verteilung der Betriebsmittel an die Elektrodenräume. Die Bleche sorgen dann neben dem mechanisch-elektrischen Kontakt zur Membran-Elektroden-Einheit auch für die Versorgung der Elektroden in den Brennstoffräumen mit Betriebsmitteln. Verschiedene Ausführungsformen für geeignete Verteilerstrukturen, wie Löcher oder Spalten sind dem Stand der Technik entnehmbar.

Zur Positionierung der Membran-Elektroden-Einheit und der diese kontaktierenden Bleche können sie in einen elektrisch nicht-leitenden Rahmen, beispielsweise aus Polysulfon, paßgenau eingesetzt werden (Anspruch 3). Die so hergestellten Rahmen können in einer dem Fachmann geläufigen Weise in Brennstoffzellen (Anspruch 4) eingesetzt werden, z.B. durch Schaffung von Brennstoffräumen. Zusätzlich können die Rahmen durch Zwischenschaltung z.B. eines federnden Wellblechs zur Stromweiterleitung in Brennstoffzellenstapeln (Anspruch 5) und zur Medientrennnung hintereinander gesetzt werden.

Das Verfahren zur Herstellung einer solchen Vorrichtung ist in Anspruch 6 angegeben. Die Bleche können zunächst plan sein. Sie werden abhängig vom Material gebogen. Das Mittel zum Biegen kann dem Stand der Technik entnommen werden. Zwischen die konvexen Seiten der gebogenen Bleche wird die Membran-Elektroden-Einheit einer PEM- bzw. DMFC-Brennstoffzelle eingebracht. Die Bleche müssen zumindest am Rand zusammengedrückt werden, wobei keine bleibenden Formveränderungen auftreten dürfen (Biegung bis maximal zur Streckungsgrenze des entsprechenden Materials). Unter Ausnutzung der Elastizität des Materials wird so ein gleichmäßiger Anpreßdruck auf die Membran-Elektroden-Einheit ausgeübt. Es hat sich gezeigt, daß so ein Ablösen der Katalysatorschicht von der im Betrieb quellenden Membran vermieden wird. Dadurch wird die Bildung nicht aktiver Bereiche auf der Membran-Elektroden-Einheit verhindert. Ein gleichmäßiger Anpreßdruck führt darüber hinaus zu einer gleichmäßigen elektrischen Kontaktierung, so daß ohmsche Verluste reduziert werden.

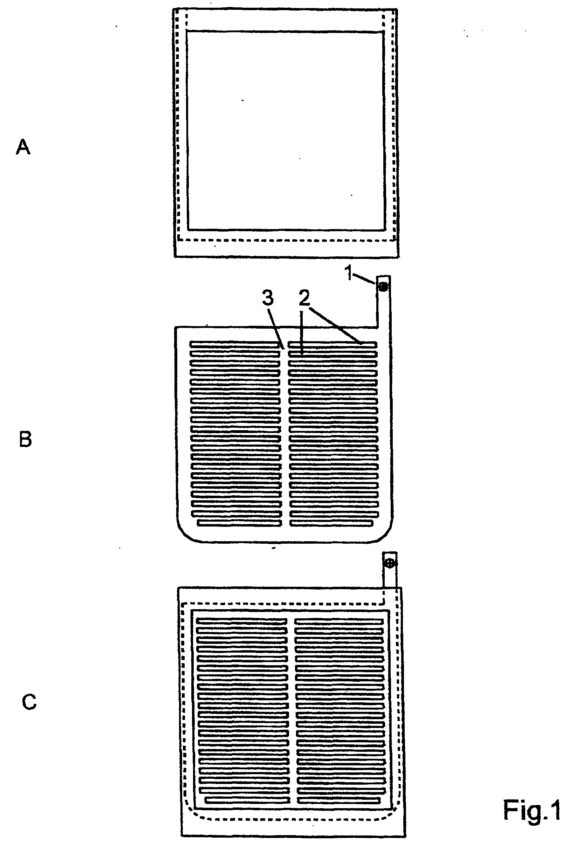

Im folgenden wird die Erfindung anhand von zwei Figuren näher erläutert. Es zeigt die Figur 1 in Aufsicht einen elektrisch nicht-leitenden Rahmen (A), ein als Stromableiter ausgeführtes Blech (B) sowie ein als Stromableiter ausgeführtes Blech, das in einen Rahmen (A) eingesetzt ist (C). Das Mittel zum Stromabgriff an dem Blech ist hier eine Kontaktlasche (1). Öffnungen (2) sorgen für die Verteilung der Betriebsmittel an die Membran-Elektroden-Einheit. Im vorliegenden Beispiel sind dies Spalten (2), die durch einen Mittelsteg (3) voneinander getrennt sind. Der Mittelsteg dient der Verstärkung des Blechs. Das Blech ist hierdurch besonders stabil.

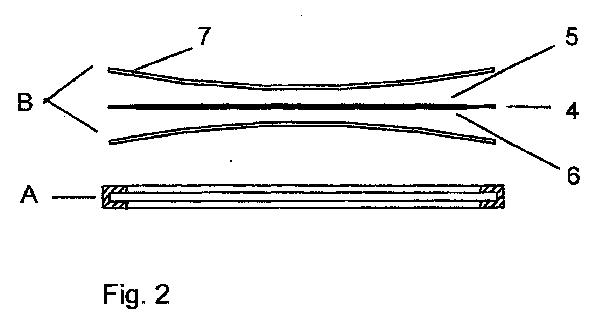

Fig. 2 zeigt im Querschnitt zwei entgegengesetzt gebogene Bleche (B) zwischen die die Membran-Elektroden-Einheit (4-6) eingebracht wird. Die trennende Linie (7) an den Enden der Bleche deutet hier die Kontaktlasche zum Stromabgriff an. Das Bezugszeichen (7) ist aus Platzgründen nur im oberen Blech (B) eingefügt. Die Kontaktlasche befindet sich allerdings entsprechend auch im entgegengesetzt gebogenen unteren Blech. Nach Zusammendrücken der Bleche an den Enden kontaktieren sie die Kathode (5) bzw. Anode (6). Durch Einsetzen in den Rahmen (A) wird die Position der Elektroden (5, 6) und der Membran (4) fixiert.

Durch die Vielzahl der verschiedenen Ausführungsformen des Blechs als mechanisch-elektrischer Kontakt, unter Umständen mit Verteilerstrukturen bzw. -funktion, kann eine Reduzierung von Material, Bauteilen und Kosten bei der Konstruktion von Brennstoffzellen und insbesondere auch Brennstoffzellenstapeln erfolgen.

## Patentansprüche

1. Vorrichtung zur mechanisch-elektrischen Kontaktierung einer Membran-Elektroden-Einheit einer Niedertemperatur-Brennstoffzelle,
**gekennzeichnet durch**
zwei gebogene Bleche, die mit ihren konvexen Seiten die Membran-Elektroden-Einheit kontaktieren.

2. Vorrichtung nach vorhergehendem Anspruch,
**dadurch gekennzeichnet,**
**daß** die Bleche Öffnungen aufweisen.

3. Vorrichtung nach einem der vorhergehenden Ansprüche,
**dadurch gekennzeichnet,**
**daß** die Bleche und die Membran-Elektroden-Einheit in einen elektrisch nicht-leitenden Rahmen eingesetzt sind.

4. Brennstoffzelle mit einer Vorrichtung nach einem der vorhergehenden Ansprüche.

5. Brennstoffzellenstapel mit einer Vorrichtung nach einem der Ansprüche 1-3.

6. Verfahren zur Herstellung einer Vorrichtung nach einem der Ansprüche 1-3,
**gekennzeichnet durch** die Schritte
- eine Membran-Elektroden-Einheit wird zwischen die konvexen Seiten von zwei gebogenen Blechen eingebracht;
- die Bleche werden zumindest am Rand aneinander gedrückt;
- die Membran-Elektroden-Einheit und die sie kontaktierenden Bleche werden in einen elektrisch nicht-leitenden Rahmen eingesetzt.
